**Europäisches Patentamt**

**European Patent Office**

**Office européen des brevets**

(19)

(11) **EP 1 112 868 A2**

(12) **EUROPEAN PATENT APPLICATION**

(43) Date of publication:
**04.07.2001 Bulletin 2001/27**

(51) Int Cl.7: **B60C 9/02**, B60C 9/00, D07B 1/06

(21) Application number: **00311659.7**

(22) Date of filing: **22.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.12.1999 JP 37487499**

(71) Applicant: **Sumitomo Rubber Industries Ltd.**
**Kobe-shi, Hyogo-ken (JP)**

(72) Inventor: **Ohya, Yukihide,**
**Sumitomo Rubber Industries, Ltd.**
**Kobe-shi, Hyogo-ken (JP)**

(74) Representative: **Stewart, Charles Geoffrey**
**Technical,**
**Dunlop Tyres Ltd.,**
**Fort Dunlop**
**Erdington, Birmingham B24 9QT (GB)**

(54) **Pneumatic tyre**

(57) A pneumatic tyre (1) comprises a tread portion (2), a pair of sidewall portions (3), a pair of bead portions (4), and a carcass ply (6) of steel cords (10) extending between the bead portions (4) through the tread portion (2) and sidewall portions (3). Each of the carcass cords (10) comprises a number "n" of steel filaments (F) each having a diameter (d) of from 0.17 to 0.40 mm. The steel filaments (F) are twisted together to have a "1Xn" bundle-twist structure or an interlace-twist structure. In a vicinity of the maximum tyre section width point P of each of the sidewall portions, a sectional shape coefficient S of each carcass cord is set in a range of from 0.5 to 0.9, wherein the sectional shape coefficient S is $(d^2 \times n)/(L1 \times L2)$, "n" is the number of the filaments, "d" is the average of the diameters of the filaments, "L1" is the largest measure of distance between two extremities of the cord which occurs in a direction in a cross section of the cord, and "L2" is the measure of distance between two extremities of the cord in a direction perpendicular to the above-mentioned direction.

**Fig.1**

EP 1 112 868 A2

## Description

The present invention relates to a pneumatic tyre having a steel ply carcass improved in durability by employing a specific cord structure in the sidewall portions.

In the pneumatic tyres especially for heavy duty vehicles such as trucks, buses and the like, when running over projections on the roads, hitting a curb and the like, carcass cords in the tyre sidewall portions are subjected to a large tensile force and a large bending deformation in a short time. In particular, the tensile force and deformation are significantly large in the vicinity of the maximum tyre section width point of each sidewall portion. Therefore, for heavy duty tyres which have a steel cord carcass, it is very important to increase the impact resistance of the carcass cords to improve the durability of the sidewall portions. Further, it is also important for improving the durability of the steel cord carcass to increase the resistance to rust caused by water penetrated through cracks on the sidewall surface.

In recent years, on the other hand, the tyre markets demand not only a durable sidewall but also a light weight tyre in environmental aspects.

In radial tyres for trucks and buses for example, conventionally, a steel cord having a so called 3X7 layered structure comprising a core formed from three steel filaments which is surrounded by a sheath formed from seven steel filaments, is widely used.

Cords having such a layered structure can be increased in tensile strength by using thicker filaments, but a weight increase is inevitable, and the bending strength tends to decrease as the diameter increases.

It is therefore, an object of the present invention to provide a pneumatic tyre, in which the durability of the sidewall portions is improved without increasing the tyre weight to meet the market demands.

According to the present invention, a pneumatic tyre comprises a tread portion, a pair of sidewall portions, a pair of bead portions, and a carcass ply of steel cords extending between the bead portions through the tread portion and sidewall portions, each of the carcass cords comprising a number "n" of steel filaments each having a diameter (d) of from 0.17 to 0.40 mm, the number "n" of steel filaments being twisted together so as to have a "1Xn" bundle-twist structure or an interlace-twist structure, and in a vicinity of the maximum tyre section width point P of each of the sidewall portions, a sectional shape coefficient S of each carcass cord being set in a range of from 0.5 to 0.9, wherein the sectional shape coefficient S is $(d^2 \times n)/(L1 \times L2)$, where n is said number of the filaments, d is the average of the diameters of the filaments, L1 is the largest measure of distance between two extremities of the cord which occurs in a direction in a cross section of the cord, and L2 is the measure of distance between two extremities of the cord in a direction perpendicular to said direction.

An embodiment of the present invention will now be described in detail in conjunction with the accompanying drawings in which:

Fig.1 is a cross sectional view of a tyre according to the present invention; and
Fig.2 is an enlarged cross sectional view of a carcass cord.

A pneumatic tyre 1 according to the present invention comprises a tread portion 2, a pair of sidewall portions 3 extending radially inward from the tread edges, a pair of bead portions 4 located at inner ends of the respective sidewall portions 3, a toroidal carcass 6 extending between the bead portions 4, and a belt 7 disposed radially outside the carcass 6 in the tread portion 2.

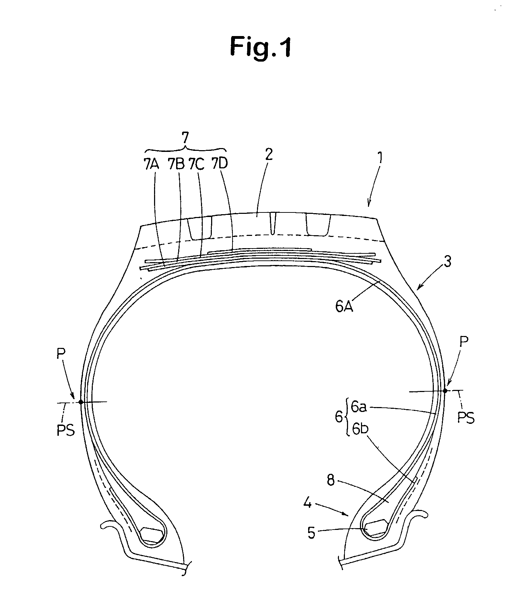

In this embodiment, the tyre 1 is a radial tyre of size 11R22.5 14P for trucks and buses, and Fig.1 shows it is a standard state in which the tyre is mounted on a standard wheel rim J for the tyre and inflated to a standard pressure, but loaded with no tyre load. Here, the standard wheel rim is the "standard rim" specified in JATMA, the "Measuring Rim" in ETRTO, the "Design Rim" in T&RA or the like. The standard pressure is the "maximum air pressure" in JATMA, the "Inflation Pressure" in ETRTO, the maximum pressure given in the "Tyre Load Limits at Various Cold Inflation Pressures" table in T&RA or the like.

The belt 7 is usually formed of three to four breaker plies including at least two cross breaker plies. In this example, the belt 7 is composed of four breaker plies 7A, 7B, and 7D. The radially innermost ply 7A is made of steel cords laid at an inclination angle of from 35 to 65 degrees with respect to a tyre circumferential direction. The radially outer second to fourth plies 7B, 7C and 7D are each made of steel cords laid at an inclination angle of from 15 to 35 degrees with respect to the tyre circumferential direction.

The bead portions 4 are each provided therein with a bead core 5 and a bead apex 8. The bead apex 8 is disposed on the radially outer side of the bead core 5 and is made of a hard rubber tapering radially outwards.

The carcass 6 comprises at least one ply of cords 10 arranged radially at an angle of from 70 to 90 degrees with respect to the tyre equator, and extending between the bead portions 4 through the tread portion 2 and sidewall portions 3, and turned up around the bead core 5 in each bead portion 4 from the inside to the outside of the tyre, so that a pair of turnup portions 6b and a main portion 6a therebetween are formed. The above-mentioned bead apex 8 is sandwiched between the turnup portion 6b and main portion 6a.

In this example, the carcass 6 is composed of a single ply 6A of cords 10 arranged at 90 degrees.

The carcass cord 10 is composed of a number "n" of steel filaments F twisted together. In the present invention, the layer-twist structure such as 3+7 structure, 3+8+13 structure etc, is not employed. Instead the carcass cord 10 used in the present invention has a "1 X n" bundle-twist structure or the under-mentioned interlace-twist structure. In either case, the steel filaments are twisted relatively loosely in comparison with the layer-twist structures.

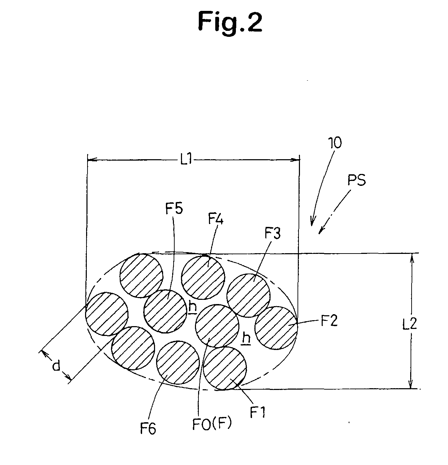

Fig.2 shows an exemplary carcass cord 10 composed of ten steel filaments F.

In the case when the cord 10 has a "1Xn" bundle-twist structure (n=10), the number "n" of steel filaments F are bundle-twisted. That is, all the steel filaments F are, as a single bundle, twisted together in the S direction or the Z direction. Strictly speaking, the relative positions of the filaments F are not fixed because the filaments are twisted relatively loosely, but it can not be said that the relative positions are intentionally changed along the length of the cord.

In the case of the interlace-twist structure, contrary to the bundle-twist and layer-twist, the filaments are intentionally exchanged in their relative positions along the length of the cord. In this case, the cord 10 is formed by exchanging two or more of the filaments F in their relative positions during twisting in a manner similarly to the bundle-twisting. Further, differently therefrom, the two or more of the filaments which are exchanged are changed along the longitudinal direction of the cord.

If the two or more of the filaments (for example two filaments) which are exchanged are not changed in the longitudinal direction of the cord, it can be said that these two filaments are twisted, and the cord is formed by twisting these twisted two filaments and other filaments together. The interlace-twist is not meant for such twist.

To put it more concretely, if a combination of filaments F0 and F1 are taken as an example, in Fig.2 namely in a portion of the cord, the filaments F0 and F1 are positioned inside and outside, respectively. However, in a subsequent portion, these are exchanged, that is, the filament F0 is positioned outside and the filament F1 inside. And next time, with respect to another combination (for example, F1&F2, F2&F3, F3&F4 or the like), a similar positional exchange is made. Such positional exchange repeats along the length of the cord. The changing of the combination may be made by selecting two or more of filaments in a regular order or irregular order or random order.

Therefore, the binding force between the filaments becomes larger than that in the bundle-twist structure but smaller than the layer-twist structure.

In either case, the diameters (d) of the steel filaments F are set in a range of from 0.17 to 0.40 mm, preferably 0.23 to 0.30 mm, and the number "n" of the filaments is preferably set in a range of from 3 to 12 to obtain the necessary tensile breaking strength.

In this embodiment, all the steel filaments F are of the same diameter (d), but it is also possible to use steel filaments F having different diameters in a cord 10.

If the filament diameter (d) is less than 0.17 mm, the cord strength decreases and it becomes impossible to improve the impact resistance of the carcass. If the filament diameter (d) is more than 0.40 mm, the bending rigidity of the cord excessively increases to impair various tyre performances.

According to the present invention, based upon the above-mentioned twist structure, the impact resistance of the carcass and the rust resistance of the carcass cords in the sidewall portions are improved by setting the following sectional shape coefficient S in a specific range.

The sectional shape coefficient S is defined as

$$(d^2 \text{ X } n)/(L1 \text{ X } L2)$$

wherein

n is the number of the filaments in a cord,
d is the average or arithmetic mean of the diameters of the filaments,
L1 is the largest measure of distance between two extremities of the cord which occurs in a direction in a cross section of the cord as shown in Fig.2, and
L2 is the measure of distance between two extremities of the cord in a direction perpendicular to the above direction.

The sectional shape coefficient S of each carcass cord 10 is set in a range of from 0.5 to 0.9, preferably 0.60 to 0.85 in the vicinity of a point P on each sidewall portion 3 at least, that is, in a region ranging about 5 % of the tyre section height from the point P towards the radially inside and outside thereof. Preferably, in a region ranging about 10 %, more preferably 15 % of the tyre section height from the point P towards the radially inside and outside thereof, the sectional shape coefficient S is set in the above-mentioned range.

Here, the point P is the maximum tyre section width point under the above-mentioned standard state of the tyre. Incidentally, the tyre section height is the measure from the bead base line to the radially outermost point on the tread face under the standard state.

As a result of setting the coefficient S as above, in at least the vicinity of the point P, as shown in Fig.2, a gap (h) is formed between any filament and at least one of other filaments adjacent thereto. For example, a filament F0 is surrounded by the adjacent filaments F1 to F6, and a gap (h) is formed between the steel filament F0 and each of the filaments F2, F4, F5, and F6.

For example, by adjusting the cord tension during building and/or vulcanising a raw tyre, the sectional shape coefficient S can be set in the above-mentioned range. Further, in making the cord, by using filaments coated with rubber having a certain thickness, the coefficient S can be also adjusted.

In the present invention, as the pneumatic tyre is constructed as above, the carcass cords in the tyre sidewall portions are optimised in the degree of freedom of movement of the filaments. Therefore, if the carcass cords is subjected to a large tensile force or a large bending deformation, the stress is dispersed and the cord rupture can be effectively prevented. Further, as the cord has gaps between the filaments, rubber penetration into the cord is improved to cover the surface of the filaments, whereby a long-term rust prevention is possible.

The present invention is suitably applied to heavy duty radial tyres, but it can be also applied to various pneumatic tyres for light truck, van, passenger car and the like.

**Claims**

1.  A pneumatic tyre (1) comprising a tread portion (2), a pair of sidewall portions (3), a pair of bead portions (4), and a carcass ply (6) of steel cords (10) extending between the bead portions (4) through the tread portion (2) and sidewall portions (3), characterised in that each said carcass cord (10) comprises a number "n" of steel filaments (F) each having a diameter (d) of from 0.17 to 0.40 mm, said number "n" of steel filaments being twisted together so as to have a "1Xn" bundle-twist structure or an interlace-twist structure, and in a vicinity of the maximum tyre section width point P of each said sidewall portion (3), a sectional shape coefficient S of each said carcass cord being set in a range of from 0.5 to 0.9, wherein said sectional shape coefficient S is $(d^2 \times n)/(L1 \times L2)$, where n is said number of filaments in a cord, d is the average of the diameters of the filaments in the cord, L1 is the largest measure of distance between two extremities of the cord which occurs in a direction in a cross section of the cord, and L2 is the measure of distance between two extremities of the cord in a direction which is perpendicular to said direction.

2.  A pneumatic tyre according to claim 1, characterised in that the sectional shape coefficient S is in a range of from 0.60 to 0.85.

3.  A pneumatic tyre according to claim 1 or 2, characterised in that the diameters (d) of the steel filaments (F) are in a range of from 0.23 to 0. 30 mm.

4.  A pneumatic tyre according to claim 1, 2 or 3, characterised in that the number "n" of the filaments (F) is in a range of from 3 to 12.

5.  A pneumatic tyre according to any of preceding claims, characterised in that in a region ranging 5 % of the tyre section height from the point P towards the radially inside and outside thereof, the carcass cords (10) each have a sectional shape coefficient S within said range.

6.  A pneumatic tyre according to any of preceding claims, characterised in that in a region ranging 10 % of the tyre section height from the point P towards the radially inside and outside thereof, the carcass cords (10) each have a sectional shape coefficient S within said range.

7.  A pneumatic tyre according to any of preceding claims, characterised in that in a region ranging 15 % of the tyre section height from the point P towards the radially inside and outside thereof, the carcass cords (10) each have a sectional shape coefficient S within said range.

# Fig.1

# Fig.2